# EUROPÄISCHE PATENTSCHRIFT

(11) **EP 3 097 313 B1**
(45) Veröffentlichungstag und Bekanntmachung des Hinweises auf die Patenterteilung: **18.11.2020**
(21) Anmeldenummer: 15700489.6
(22) Anmeldetag: 19.01.2015
(51) Int. Cl.: F16B 25/00, F16B 39/30, F16B 33/02

(54) **SCHRAUBE, BEFESTIGUNGSANORDNUNG UND VERWENDUNG EINER SCHRAUBE**
SCREW, FASTENING ARRANGEMENT AND USE OF A SCREW
VIS, SYSTÈME DE FIXATION ET UTILISATION D'UNE VIS

(30) Priorität: 23.01.2014 DE 102014000940
(43) Veröffentlichungstag der Anmeldung: 30.11.2016
(73) Patentinhaber: SFS Intec Holding AG, 9435 Heerbrugg (CH)
(72) Erfinder: MAIR, Roland, A-6840 Götzis (AT); ZÄCH, Marco, CH-9444 Diepoldsau (CH)
(86) Internationale Anmeldenummer: PCT/EP2015/050845
(87) Internationale Veröffentlichungsnummer: WO 2015/110377

(56) Entgegenhaltungen:
- WO-A1-2011/083060
- DE-A1-102004 034 246
- DE-U1-202005 013 320
- US-A- 3 541 918
- US-A- 4 781 503
- US-B1- 6 394 726

## Beschreibung

Die Erfindung betrifft eine Schraube mit einem mit einem Angriff ausgestatteten Schraubenkopf, einem Schaft, der eine Schraubenachse definiert und ein Gewinde trägt, und einem zwischen dem Gewinde und dem Schraubenkopf angeordneten gewindefreien Schaftabschnitt, wobei ein kopfseitiges Ende des Gewindes abgehackt ist. Das Gewinde endet benachbart zu dem gewindefreien Schaftabschnitt in einer Endebene, die in konstantem Abstand zum Schraubenkopf den Schaft zumindest teilweise umläuft und einen Winkel α_{E} mit der Schraubenachse bildet. Die kopfseitige Flanke des Gewindes entfernt von dem gewindefreien Schaftabschnitt bildet einen Winkel αF mit der Schraubenachse und ist kleiner ist als der Winkel α_{F}.

Weiterhin betrifft die Erfindung eine Befestigungsanordnung sowie eine Verwendung einer erfindungsgemäßen Schraube.

In der Schrift US 6,394,726 wird eine Schraube beschrieben mit einem Gewindezug, dessen kopfseitige Gewindeflanke aus zwei radial versetzten, zueinander verkippten Flächen gebildet wird.

Das Dokument US 3,541,918 beschreibt einen selbsthemmenden Befestiger mit einer selbstschneidenden Schraube. Die Schraube weist ein Gewinde auf mit einem kopfseitig stumpfen Ende. Die Steigung des kopfseitigen Gewindefusses ist über die gesamte Länge konstant. Die Steigung der unteren Kante des Gewindefusses nimmt in Kopfnähe ab, was zu einer Verbreiterung des Gewindefusses führt. Die kopfseitige Aussenkante des Gewindes hat ebenfalls eine gleichförmige Steigung, wie die zugehörige Unterkante. Das Gewinde verbreitert sich am kopfseitigen Ende nach unten; es bildet sich also eine, vom kopfseitigen Gewindeende aus betrachtet, in Längsrichtung spitz zulaufende Kammfläche. Das kopfseitige Gewindeende weist ferner zwei Flächen auf: 1) Eine im Wesentlichen flache Endfläche, die die besagte Kammfläche mit dem Schaft verbindet. 2) Eine im Wesentlichen flache Deckfläche, die in einer Radialebene zum Schaft liegt.

Bei den vorliegend beschriebenen Schrauben, Befestigungsanordnungen und Verwendungen geht es meist um die Befestigung von Außen- oder Innenblechen von Sandwichpaneelen. Die dabei verwendeten Blechpakete sollen von Schrauben sicher zusammengehalten werden, welche ihrerseits kostengünstig sind und bei der Verwendung einfach und schnell eingesetzt werden können.

Bei Befestigungsanordnungen der genannten Art ist man insbesondere mit zwei Problemen konfrontiert. Zum einen soll vermieden werden, dass eine einmal in ein Blechpaket eingedrehte Schraube durch unbeabsichtigtes Zurückdrehen wieder aus dem Blechpaket entfernbar ist. Zum anderen will man einen möglichst spielfreien Sitz der Schraube im Blechpaket gewährleisten.

Prinzipielle Voraussetzung für die Rückdrehsicherheit ist der erwähnte gewindefreie Schaftabschnitt zwischen dem Gewinde und dem Schraubenkopf, wobei jedoch durchaus noch ein Kontakt zwischen dem letzten Gewindegang und dem Blechpaket bestehen beziehungsweise zustande kommen darf, eben um die erwähnte Spielfreiheit beziehungsweise ein möglichst geringes Spiel der Schraube in der Befestigungsanordnung zur Verfügung zu stellen.

Der Erfindung liegt somit die Aufgabe zugrunde, eine Schraube und damit eine Befestigungsanordnung sowie eine Verwendung der Schraube anzugeben, wobei die Schraube rückdrehsicher ist und eine möglichst spielfreie Komponente der Befestigungsanordnung darstellt. Es sollen hohe Anzugskräfte generierbar und hohe Scherkräfte aufnehmbar sein.

Diese Aufgabe wird mit dem unabhängigen Anspruch 1 gelöst. Vorteilhafte Weiterbildungen der Erfindung sind in den abhängigen Ansprüchen angegeben.

Ein kopfseitiges Ende des Gewindes der beschriebenen Schraube ist abgehackt. Das Gewinde endet auf der Seite des Schraubkopfes also nicht wie ein herkömmliches Gewinde. Herkömmliche Gewinde laufen, meist bereits bedingt durch die Gewindeherstellung durch kaltumformende Verfahren, insbesondere Gewinderollen, kontinuierlich aus. Dies bedeutet, dass das durch das Gewinde über dem Schaft hervorstehende Material mit zunehmender Annäherung an den Schraubenkopf kontinuierlich abnimmt, bis kein Gewinde mehr zu erkennen ist. Das Gewinde "läuft auf null aus". Im Gegensatz dazu ist hier das kopfseitige Ende des Gewindes abgehackt ausgeführt, das heißt es endet abrupt und nicht kontinuierlich. Unmittelbar neben dem Übergang zwischen gewindefreiem Schaft und Gewindeende ist also noch erhebliches Gewindematerial vorhanden. Das Gewinde läuft nicht auf null aus, sondern endet unvermittelt und plötzlich. Hierdurch wird die Rückdrehsicherheit der Schraube verbessert. Ist der gewindefreie Schaftabschnitt einmal durch das Schraubenloch hindurchgetreten, so erschwert das abgehackte Ende des Gewindes das Zurückdrehen. Bei einer herkömmlichen Schraube, bei der das Gewinde kontinuierlich bis auf null ausläuft, wird ein Zurückdrehen der Schraube begünstigt, denn am Anfang des Eingriffs des Gewindes mit der benachbarten Schicht der Befestigungsanordnung ist praktisch kein Widerstand zu überwinden, und es gibt keine bestimmten Positionen, die das erneute Eingreifen des Gewindes in die Schichten der Befestigungsanordnung verhindern würden. Eine minimale Kraft in Rückwärtsrichtung und ein Zurückdrehen der Schraube reichen aus, um die Schraube aus der Befestigungsanordnung wieder zu entfernen, da sie ohne Weiteres mit ihrem kopfseitigen Gewindeende in die Schichten der Befestigungsanordnung eingreift. Ist das kopfseitige Ende des Gewindes abgehackt, ist es beim Zurückziehen und Zurückdrehen der Schraube sehr viel unwahrscheinlicher, dass es zu einem Eingriff des Gewindeendes in das Paket der Befestigungsanordnung kommt. Durch Vibrationen oder sonstige äußere Einwirkungen kommt es allemal nicht zu einem Verlieren der Schraube mit dem abgehackten Gewinde, was bei herkömmlichen Schrauben und ihrem "asymptotischen" Auslaufen des Gewindes durchaus vorkommen kann.

Das Gewinde endet benachbart zu dem gewindefreien Schaftabschnitt in einer Endebene, die in konstantem Abstand zum Schraubenkopf den Schaft zumindest teilweise umläuft und einen Winkel α_{E} mit der Schraubenachse bildet. Ferner bildet eine kopfseitige Flanke des Gewindes entfernt von dem gewindefreien Schaftabschnitt einen Winkel α_{F} mit der Schraubenachse, wobei gilt dass der Winkel α_{E} kleiner ist als der Winkel α_{F}. Eine solche Endebene tritt an einer Vielzahl von Punkten um den Umfang der Schraube mit der benachbarten Schicht der Befestigungsanordnung in Kontakt, wenn entweder im Fertigzustand der Befestigungsanordnung ausreichen Spannung vorhanden ist, oder wenn die Schraube durch irgendwelche Gründe zurückgezogen wird. In jedem Fall wird durch die "abgeflachte" Endebene der Kontakt zwischen dem Gewinde und dem Rest der Befestigungsanordnung verbessert, so dass das Spiel der Schraube in der Befestigungsanordnung verringert wird.

Erfindungsgemäss ist vorgesehen, dass das Gewinde über mehrere Gewindegänge auf den Schraubenkopf zulaufend eine konstante Steigung aufweist, und ab einem Knick mit einer Steigung von 0 endet. Die Verhältnisse zwischen den Winken α_{E} und α_{F} ergeben sich durch das "Knicken" des Gewindes von einer echten Gewindesteigung in eine Gewindesteigung von 0 quasi von selbst. Das Gewindestück mit Gewindesteigung 0 kann dann wieder vorteilhaft mit abgehacktem kopfseitigem Ende realisiert sein.

Die erfindungsgemäße Schraube ist in besonders vorteilhafter Weise dadurch weitergebildet, dass der gewindefreie Schaftabschnitt mindestens teilweise einen Durchmesser aufweist, welcher grösser als der Kerndurchmesser des Gewindes und kleiner als der Gewindeaußendurchmesser ist. Da zumindest die äußerste Schicht des Schichtpaketes, in welches die Schraube eingeführt wird, im Allgemeinen so vorgebohrt ist, dass die Schraube mit ihrem Gewinde ohne Kontakt durch die Bohrung hindurchgeführt werden kann, hat die Bohrung einen deutlich größeren Durchmesser, als der Kern des Gewindes. Indem der gewindefreie Schaftabschnitt nun zumindest teilweise mit größerem Durchmesser, als der Kern des Gewindes gewählt wird, wird das Spiel in der Bohrung der äußeren Schicht vermindert.

Ebenfalls kann vorgesehen sein, dass der gewindefreie Schaftabschnitt mindestens teilweise einen Durchmesser aufweist, welcher kleiner als oder gleich dem Kerndurchmesser des Gewindes ist. Hierdurch wird erreicht, dass der gewindefreie Schaftabschnitt reibungsfrei in die Schichtanordnung eindringt.

Es kann vorgesehen sein, dass der gewindefreie Schaftabschnitt benachbart zu dem Schraubenkopf eine Stufe mit einem Schaftdurchmesser aufweist, welcher größer als der Kerndurchmesser des Gewindes ist.

Gemäß einer speziellen Ausführungsform der vorliegenden Erfindung ist die Schraube so ausgestaltet, dass die Schraube eine Bohrschraube mit einem in eine Bohrspitze auslaufenden Schaft ist. Ist die Schraube als Bohrschraube realisiert, kann das Schichtpaket wahlweise mit Vorbohrungen in einer oder mehreren Schichten ausgestattet sein, oder auch ohne jegliche Vorbohrung.

Es ist auch möglich, dass die Schraube eine Verdrängungsschraube mit einem in die Spitze der Verdrängungsschraube laufenden Gewinde ist. Eine Verdrängungsschraube trägt im Wesentlichen kein Material ab, sondern es verdrängt das Material nicht oder unzureichend vorgebohrter Schichten, so dass sich beim Eindrehen der Schraube trichterartige Strukturen bilden. Ist beispielsweise die unterste Schicht einer Schichtanordnung nicht vorgebohrt, so bildet sich die trichterartige Struktur in dieser untersten Schicht. Sind die Länge des gewindefreien Schaftabschnittes, die Dicke des Paketes und die Dicke der Schraube gut aufeinander abgestimmt, so liegt die trichterartige Struktur im Fertigzustand mit ihrem Rand auf dem endenden Gewinde auf, das heißt insbesondere auf der Endebene des Gewindes, wobei gleichwohl ein Zurückdrehen der Schraube durch insbesondere das abgehackte Ende des Gewindes nicht möglich beziehungsweise nicht wahrscheinlich ist.

Gemäß einer bevorzugten Ausführungsform ist vorgesehen, dass das Gewinde ein Blechgewinde ist.

Ebenfalls kann die Schraube so gewählt sein, dass das Gewinde ein- oder mehrgängig ist.

Die Erfindung besteht weiterhin in einer Befestigungsanordnung mit einem Schichtpaket mit mindestens einem dünnen Blech und einer erfindungsgemäßen Schraube, wobei die Dicke des Schichtpakets der maximalen Länge des gewindefreien Schaftabschnitts entspricht. Dabei ist insbesondere auf die Dicke des Schichtpakets im Endzustand und in unmittelbarer Umgebung der Schraube abzustellen, denn diese Dicke ändert sich beim Einschrauben der Schraube, insbesondere wenn es sich um eine Verdrängungsschraube handelt.

Es ist bevorzugt, dass das dünne Blech die von dem Schraubenkopf am weitesten entfernte Schicht des Schichtpakets ist. Dieses dünne Blech eignet sich besonders zum Ausformen eines Trichterrandes durch das Eindrehen der Verdrängungsschraube und somit für das vorteilhafte Aufliegen des Trichterrandes auf dem Gewindeende.

Von besonderem Vorteil ist, dass die von dem Schraubenkopf am weitesten entfernte Schicht eine maximale Dicke von 1 mm hat. Insbesondere die Dicke der am weitesten vom Schraubenkopf entfernten Schicht hat wesentlichen Einfluss auf den beschriebenen Verdrängungsmechanismus, weshalb bestimmte Schichtdicken besonders vorteilhafte Auswirkungen haben, insbesondere von weniger als 1 mm oder sogar von 0,7 mm oder sogar weniger als 0,5 mm. Das Verfahren ist auf dieser Grundlage geeignet, an Fassaden mit sehr dünnen Außenschichten Profile und andere Aufbauten anzubringen, welche erhöhte Anzugswerte benötigen.

Demgemäß besteht die Erfindung auch in einer Verwendung einer erfindungsgemäßen Schraube außen oder innen an einem Gebäude.

Insbesondere ist die Verwendung zur Befestigung von Außen- oder Innblechen von Sandwichpaneelen ausgebildet.

Die Erfindung wird nun mit Bezug auf die begleitenden Zeichnungen anhand besonders bevorzugter Ausführungsformen beispielhaft erläutert. In der Beschreibung und den Figuren sind auch Ausführungsformen angegeben, die nicht in den Ansprüchen erfasst sind. Hierbei handelt es sich nicht um Ausführungsformen der Erfindung, sondern um Aspekte, die das Verständnis der Erfindung erleichtern.

Es zeigen:
- Figur 1: eine teilweise geschnittene Teil-Seitenansicht einer ersten Ausführungsform einer nicht erfindungsgemäßen Schraube;
- Figur 2: eine erste Einzelheit aus Figur 1;
- Figur 3: eine zweite Einzelheit aus Figur 1;
- Figur 4: eine Seitenansicht einer zweiten Ausführungsform einer nicht erfindungsgemäßen Schraube;
- Figur 5: eine erste Einzelheit aus Figur 4;
- Figur 6: eine zweite Einzelheit aus Figur 4;
- Figur 7: eine Seitenansicht einer dritten Ausführungsform einer nicht erfindungsgemäßen Schraube;
- Figur 8: eine erste Einzelheit aus Figur 7;
- Figur 9: eine zweite Einzelheit aus Figur 7;
- Figur 10: eine Seitenansicht einer vierten Ausführungsform einer nicht erfindungsgemäßen Schraube;
- Figur 11: eine Einzelheit aus Figur 10;
- Figur 12: eine Seitenansicht einer fünften Ausführungsform einer nicht erfindungsgemäßen Schraube;
- Figur 13: eine nicht erfindungsgemäße Befestigungsanordnung in teilweise geschnittener Darstellung;
- Figur 14: eine Seitenansicht einer Ausführungsform einer erfindungsgemäßen Schraube; und
- Figur 15: eine Einzelheit aus Figur 14.

Bei der nachfolgenden Beschreibung der Zeichnungen bezeichnen gleiche Bezugszeichen gleiche oder vergleichbare Komponenten.

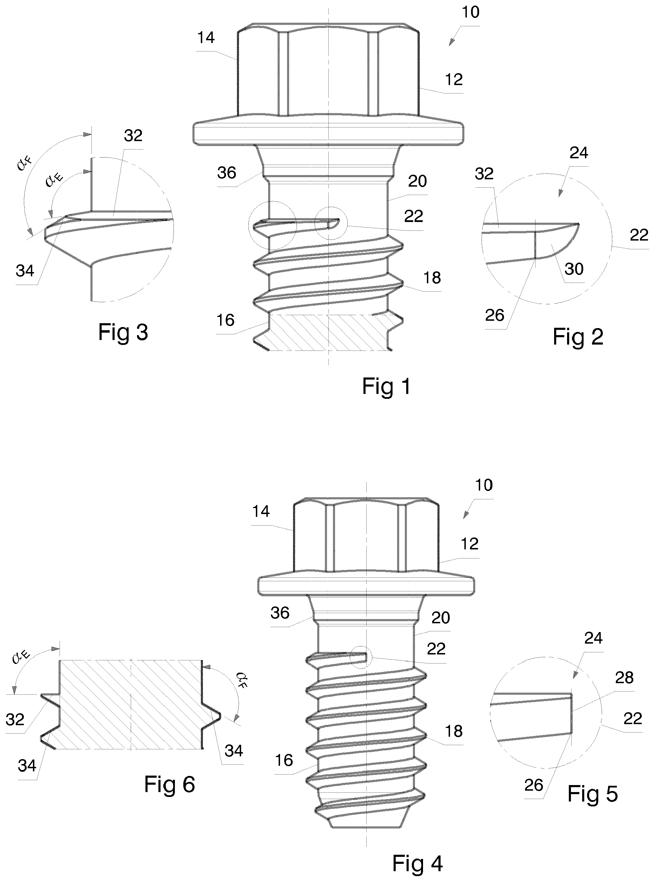

Figur 1 zeigt eine teilweise geschnittene Teil-Seitenansicht einer ersten Ausführungsform einer Schraube 10. Figur 2 zeigt eine erste Einzelheit aus Figur 1.

Figur 3 zeigt eine zweite Einzelheit aus Figur 1. Die Schraube 10 hat einen Schraubenkopf 14, welcher einen Angriff 12 für ein Werkzeug zur Verfügung stellt. Mit dem Schraubenkopf 14 steht ein Schaft 16 in Verbindung, der, ebenso wie der Schraubenkopf 14, eine Achse definiert. Der Schaft 16 trägt abschnittsweise ein Gewinde 18. Ebenfalls weist der Schaft 16 einen gewindefreien Abschnitt 20 auf.

Das kopfseitige Ende 22 des Gewindes 18 hat eine spezielle Ausbildung. Es läuft nicht, wie bei herkömmlichen Schrauben, kontinuierlich in den Schaft 20 aus, quasi asymptotisch oder "auf null", sondern es ist abgehackt. In diesem Sinne hat das kopfseitige Ende 22 des Gewindes 18 einen Absatz 24, wobei das Gewinde, ausgehend von einem Anfangspunkt 26 des Absatzes 24, in einer Fläche 30 auf den Schaft 16 zuläuft. In dem vorliegenden Fall ist die Fläche 30 mit einer Krümmung ausgestattet. Aufgrund der besonderen Ausgestaltung des kopfseitigen Endes 22 des Gewindes 18, wird der Schraube 10 eine besondere Rückdrehsicherheit vermittelt, denn eine bis weitgehend zum Ende des Gewindes hin vorliegenden radiale Höhe des Gewindes erschwert das Eingreifen des Gewindes in die anderen Komponenten der Befestigungsanordnung beim Zurückziehen und Zurückdrehen der Schraube 10.

Eine weitere Besonderheit der Schraube 10 ist in den Winkeln α_{E} und α_{F} zu erkennen, welche die Endebene 32 des Gewindes 18 beziehungsweise die normalen Flanken 34 des Gewindes 18 mit der Schraubenachse bilden. Die Endebene des Gewindes 32 schließt dabei einen geringeren Winkel α_{E} mit der Schraubenachse ein, als die Flanke 34 mit ihrem Winkel α_{F}. Hierdurch wird eine bessere Anlage der Schraube 10 an anderen Komponenten der Befestigungsanordnung gewährt, wodurch das Spiel der Schraube 10 in der Befestigungsanordnung verringert wird und was ebenfalls einen positiven Beitrag zu einer verbesserten Rückdrehsicherheit liefert. Bei der Ausführungsform der Figuren 1 bis 3 ist der Winkel α_{E} etwas größer als ein rechter Winkel.

Figur 4 zeigt eine Seitenansicht einer zweiten Ausführungsform einer Schraube 10. Figur 5 zeigt eine erste Einzelheit aus Figur 4. Figur 6 zeigt eine zweite Einzelheit aus Figur 4. Die hier dargestellte Schraube 10 entspricht in weitesten Teilen derjenigen aus Figur 1, wobei hier als weitere Besonderheit der Schraube zu erkennen ist, dass diese stumpf endet. Weitere Unterscheide der Schraube gemäß Figur 4 im Vergleich zu derjenigen gemäß Figur 1 hängen mit dem kopfseitigen Ende 22 des Gewindes 18 und mit der Endebene 32 des Gewindes 18 zusammen.

Das kopfseitige Ende 22 des Gewindes ist hier durch einen radialen Schnitt mit axial ausgerichteter Schnittebene 28 definiert. Hieraus ergeben sich die Hauptvorteile im Hinblick auf die Rückdrehsicherheit.

Die Endebene 32 des Gewindes schließt hier einen rechten Winkel mit der Schraubenachse ein. Jedenfalls ist auch hier der Winkel α_{E}, den die Endebene 32 mit der Schraubenachse einschließt, größer als der Winkel α_{F}, den eine ansonsten beliebige Flanke 34 des Gewindes 18 mit der Schraubenachse bildet.

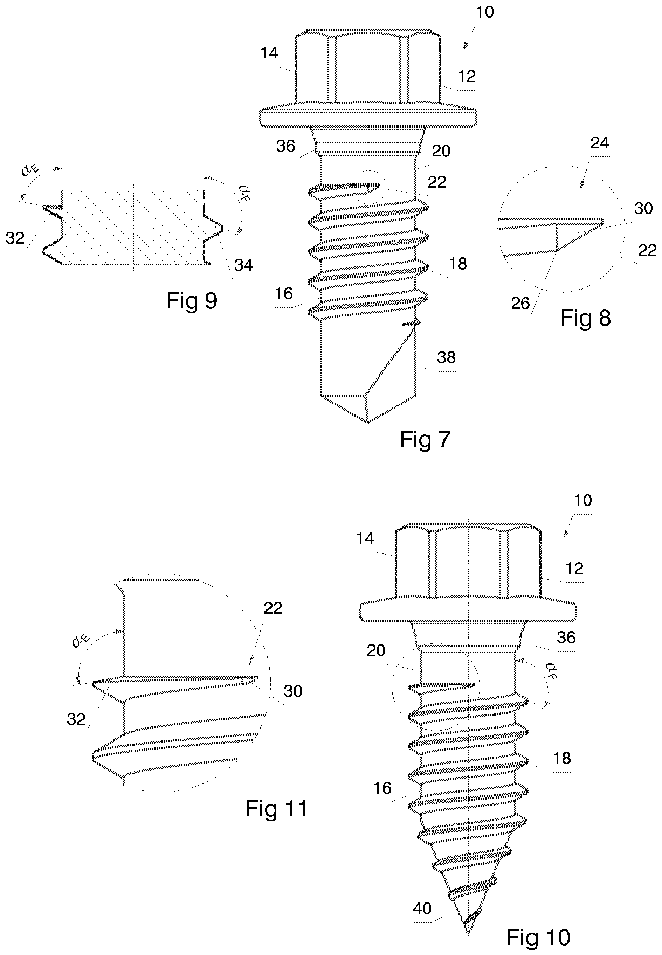

Figur 7 zeigt eine Seitenansicht einer dritten Ausführungsform einer Schraube 10. Figur 8 zeigt eine erste Einzelheit aus Figur 7. Figur 9 zeigt eine zweite Einzelheit aus Figur 7. Die hier gezeigte Schraube 10 endet, anders als die Schraube gemäß Figur 4, nicht stumpf, sondern mit einer Bohrspitze 38. Ansonsten sind die meisten Merkmale der Schraube 10 wiederum identisch zu den Schrauben gemäß den Figuren 1 und 4. Im Unterschied zu den vorbeschriebenen Schrauben hat die Schraube 10 gemäß Figur 7 jedoch wieder besondere Eigenschaften im Hinblick auf ihr kopfseitiges Ende 22 des Gewindes 18 sowie die Endebene 32 des Gewindes.

Das kopfseitige Ende 22 des Gewindes 18 endet hier ausgehend von einem Anfangspunkt 26 mit einer Ebene, also einer Fläche ohne Krümmung, die auf den Schaft 16 zuläuft.

Im Unterschied zu den Schrauben gemäß den Figuren 1 und 4 hat die Schraube 10 gemäß Figur 7 eine Endebene 32 des Gewindes 18, die einen spitzen Winkel α_{E} mit der Schraubenachse einschließt. Wiederum ist der Winkel α_{E} der Endebene zur Schraubenachse kleiner als der Winkel α_{F} einer ansonsten beliebigen Flanke 34 des Gewindes 18.

Figur 10 zeigt eine Seitenansicht einer vierten Ausführungsform einer Schraube 10. Figur 11 zeigt eine Einzelheit aus Figur 10. Die hier zu erkennende Schraube 10 ist eine Verdrängungsschraube mit einem Gewinde 18, das bis in die Spitze 40 der Schraube 10 läuft. Ansonsten weist die Schraube 10 wieder Besonderheiten im Hinblick auf das kopfseitige Ende 22 des Gewindes 18 und die Ebenebene 32 des Gewindes 18 auf.

Das kopfseitige Ende 22 des Gewindes ist wiederum abgehackt, vergleichbar, wie in Figur 1, wobei die Endfläche 30 des Gewindes hier etwas länger gezogen ist, als bei Figur 1.

Für die Endebene 32 des Gewindes 18 gilt das, was vorstehend zu Figur 1 ausgeführt wurde.

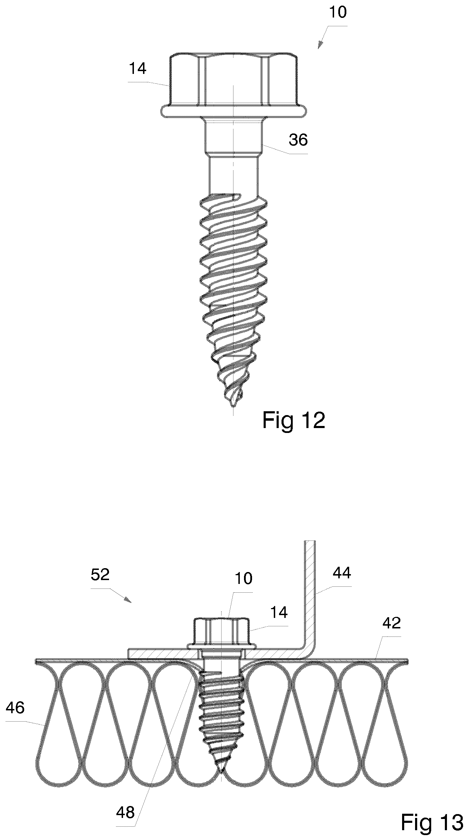

Figur 12 zeigt eine Seitenansicht einer fünften Ausführungsform einer Schraube 10. Auch bei der Schraube 10 gemäß Figur 12 handelt es sich um eine Verdrängungsschraube. Als Besonderheit ist hier zu erwähnen, dass die Stufe 36 des Schaftes 16 benachbart zum Kopf 14 der Schraube 10 hier deutlich länger ausgebildet ist, als bei den zuvor beschriebenen Schrauben.

Figur 13 zeigt eine Befestigungsanordnung 52 in teilweise geschnittener Darstellung. Die Befestigungsanordnung 52 umfasst ein dünnes Blech 42 und ein daran angeordnetes weiteres Blech 44. Die Bleche 42, 44 bilden ein Blechpaket beziehungsweise Schichtpaket 42, 44. Die Befestigungsanordnung 52 weist ebenfalls eine Schraube 10 auf, die mit ihrem Schraubenkopf 14 auf dem äußeren Blech 44 des Blechpaketes 42, 44 aufliegt. Ein Schaft der Schraube ist durch Löcher in den Blechen 42, 44 geführt. An dem dünnen Blech 42 ist Dämmmaterial 46 angeordnet. Die Schraube 10 ist als Verdrängungsschraube ausgebildet. Beim Eindrehen der Schraube 10 in das Blechpaket 42, 44 ist das äußere Blech 44 vorgebohrt, während das dünne Blech 42 unversehrt ist. Die Spitze dringt in das dünne Blech 42 ein, und beim Eindrehen der Schraube 10 in das Schichtpaket 42, 44, nimmt das dünne Blech 42 in der Umgebung der Schraube 10 eine Trichterform 48 an. Der Rand des Trichters stützt sich bei vollständig in das Schichtpaket 42, 44 eingedrehter Schraube 10 vorzugsweise an der Endebene des Gewindes ab, also an dem Teil des Gewindes, welcher im Zusammenhang mit den vorliegenden weiteren Figuren durch seinen Winkel α_{E} mit der Schraubenachse im Vergleich zu dem Winkel α_{F} einer ansonsten beliebigen Flanke des Gewindes mit der Schraubenachse definiert wurde. Die abgestützte Situation kann entweder immer vorliegen, oder nur beim Zurückziehen der Schraube 10, wenn diese nämlich noch ein gewisses Spiel in der Befestigungsanordnung 52 hat. Rückdrehsicherheit erhält die Schraube 10 dadurch, dass das kopfseitige Ende des Gewindes 18 so gestaltet ist, wie im Zusammenhang mit den weiteren vorliegenden Figuren beschrieben. Hierdurch wird beim Zurückdrehen der Schraube 10 ein Eingreifen der Schraube 10 in den Trichterrand 48 erschwert beziehungsweise unwahrscheinlicher.

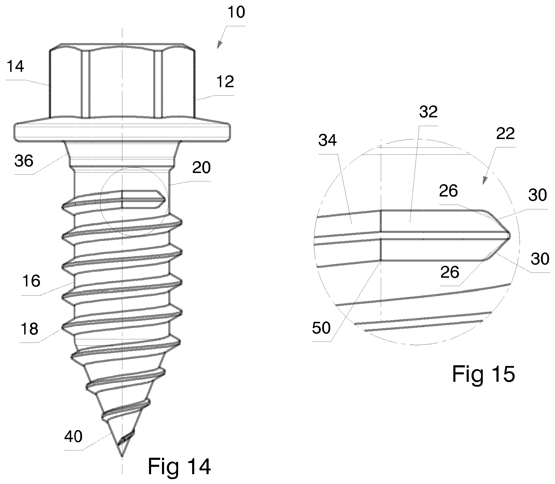

Figur 14 zeigt eine Seitenansicht einer Ausführungsform einer erfindungsgemäßen Schraube. Figur 15 zeigt eine Einzelheit aus Figur 14. Die hier dargestellte Schraube 12 mit ihrem einen Angriff 12 zur Verfügung stellenden Schraubenkopf 14, ihrem Schaft 16, der ein Gewinde 18 trägt, ihrem gewindefreien Schaftabschnitt 20, ihrer Spitze 40 und ihrer Stufe 36 vom Schaft 16 zum Schraubenkopf 14 hat wiederum eine besondere Gestaltung im Hinblick auf das kopfseitige Ende 22 des Gewindes 18 sowie die Endebene 32 des Gewindes 18. Bis zu einem Knick 50 läuft das Gewinde 18 mit konstanter beziehungsweise nahezu konstanter Steigung auf den Schraubenkopf 14 zu. Ab dem Knick 50 hat das Gewinde eine geringere Steigung bis zu seinem abgehackten Ende 22. Im vorliegenden Fall hat das Gewindeende ab dem Knick 50 eine Steigung von 0. Hat das Gewinde 19 ansonsten vor dem Knick 50 und nach dem Knick 50 eine vergleichbare Gestalt, so ist der Winkel zwischen der Schraubenachse und der Endebene 32 wiederum kleiner als der Winkel zwischen der Schraubenachse und der Gewindeflanke 34 an anderer Stelle. Der Absatz 26 am Gewindeende 22 bildet wiederum die Überführung zu einer Endfläche 30, mit der das Gewinde auf den Schaft 16 zuläuft.

Bisher wurden Schrauben beschrieben, deren Gewinde entfernt von dem gewindefreien Bereich symmetrische Gewindeflanken aufweisen. Die Erfindung ist jedoch ebenso mit Schrauben realisierbar, die unsymmetrische Gewindeflanken umfassen.

### Bezugszeichenliste

- 10: Schraube
- 12: Angriff
- 14: Schraubenkopf
- 16: Schaft
- 18: Gewinde
- 20: gewindefreier Schaftabschnitt
- 22: kopfseitiges Ende
- 24: Absatz
- 26: Anfangspunkt
- 28: Schnittebene
- 30: Fläche
- 32: Endebene
- 34: Gewindeflanke
- 36: Stufe
- 38: Bohrspitze
- 40: Spitze
- 42: dünnes Blech
- 44: äußeres Blech
- 42: Blechpaket/Schichtpaket
- 44: Blechpaket/Schichtpaket
- 46: Dämmmaterial
- 48: Trichterform
- 50: Knick
- 52: Befestigungsanordnung

## Patentansprüche

1. Schraube (10) mit
- einem mit einem Angriff (12) ausgestatteten Schraubenkopf (14),
- einem Schaft (16), der eine Schraubenachse definiert und ein Gewinde (18) trägt, und
- einem zwischen dem Gewinde (18) und dem Schraubenkopf (14) angeordneten gewindefreien Schaftabschnitt (20),
- wobei ein kopfseitiges Ende (22) des Gewindes (18) abgehackt ist,
- wobei das Gewinde (18) benachbart zu dem gewindefreien Schaftabschnitt (20) in einer Endebene (32) endet, die in konstantem Abstand zum Schraubenkopf (14) den Schaft (16) zumindest teilweise umläuft und einen Winkel α_{E} mit der Schraubenachse bildet,
- wobei eine kopfseitige Flanke (34) des Gewindes (18) entfernt von dem gewindefreien Schaftabschnitt (20) einen Winkel α_{F} mit der Schraubenachse bildet und
- der Winkel α_{E} kleiner ist als der Winkel α_{F}
**dadurch gekennzeichnet, dass**
das Gewinde (18) über mehrere Gewindegänge auf den Schraubenkopf (14) zulaufend eine konstante Steigung aufweist, und ab einem Knick (50) mit einer Steigung von 0 endet.

2. Schraube (10) nach Anspruch 1, **dadurch gekennzeichnet, dass** der gewindefreie Schaftabschnitt (10)
i) mindestens teilweise einen Durchmesser aufweist, welcher grösser als der Kerndurchmesser des Gewindes und kleiner als der Gewindeaußendurchmesser ist; oder
ii) mindestens teilweise einen Durchmesser aufweist, welcher kleiner als oder gleich dem Kerndurchmesser des Gewindes ist.

3. Schraube (10) nach einem der vorhergehenden Ansprüche, **dadurch gekennzeichnet, dass** der gewindefreie Schaftabschnitt benachbart zu dem Schraubenkopf eine Stufe (36) mit einem Schaftdurchmesser aufweist, welcher größer als der Kerndurchmesser des Gewindes ist.

4. Schraube (10) nach einem der vorhergehenden Ansprüche, **dadurch gekennzeichnet, dass** die Schraube eine Bohrschraube mit einem in eine Bohrspitze (38) auslaufenden Schaft oder eine Verdrängungsschraube mit einem in die Spitze (40) der Verdrängungsschraube laufenden Gewinde ist.

5. Schraube nach einem der vorhergehenden Ansprüche, **dadurch gekennzeichnet, dass** das Gewinde (18) ein Blechgewinde ist.

6. Schraube nach einem der vorhergehenden Ansprüche, **dadurch gekennzeichnet, dass** das Gewinde (18) ein- oder mehrgängig ist.

7. Befestigungsanordnung (40) mit einem Schichtpaket mit mindestens einem dünnen Blech (42) und einer Schraube (10) nach einem der vorhergehenden Ansprüche, wobei die Dicke des Schichtpakets maximal der Länge des gewindefreien Schaftabschnitts (20) entspricht.

8. Befestigungsanordnung nach Anspruch 7, **dadurch gekennzeichnet, dass** das dünne Blech (42) die von dem Schraubenkopf (14) am weitesten entfernte Schicht des Schichtpakets ist.

9. Befestigungsanordnung nach Anspruch 7 oder 8, **dadurch gekennzeichnet, dass** die von dem Schraubenkopf am weitesten entfernte Schicht eine maximale Dicke von 1 mm hat.

## Claims

1. A screw (10), comprising
- a screw head (14) provided with an engagement portion (12),
- a shaft (16) that defines a screw axis and carries a thread (18), and
- a thread-free shaft portion (20) arranged between the thread (18) and the screw head (14),
- wherein an end (22) of the thread (18) at the head is cut off,
- wherein the thread (18) ends adjacently to the thread-free shaft portion (20) in an end plane (32) that extends around the shaft (16) at least in part at a constant distance from the screw head (14) and forms an angle α_{E} with the screw axis,
- wherein remote from the thread-free shaft portion (20), flank (34) of the thread (18) at the head forms an angle α_{F} with the screw axis, and
- the angle α_{E} is smaller than the angle α_{F},
**characterized in that**
the thread (18) running towards the screw head (14) has a constant pitch across a plurality of thread turns, and ends at a pitch of 0 after a kink (50).

2. The screw (10) according to claim 1, **characterized in that** the thread-free shaft portion (10) has,
i) at least in part, a diameter that is greater than a core diameter of the thread and smaller than the outer diameter of the thread; or
ii) at least in part, a diameter that is smaller than or equal to the core diameter of the thread.

3. The screw (10) according to any one of the preceding claims, **characterized in that** adjacent to the screw head, the thread-free shaft portion comprises a step (36) with a shaft diameter that is greater than a core diameter of the thread.

4. The screw (10) according to any one of the preceding claims, **characterized in that** the screw is a drilling screw with a shaft that tapers into a drilling tip (38), or is a drive-out screw with a thread that extends into the tip (40) of the drive-out screw.

5. The screw (10) according to any one of the preceding claims, **characterized in that** the thread (18) is a self-tapping thread.

6. The screw (10) according to any one of the preceding claims, **characterized in that** the thread (18) is a single-start or multi-start thread.

7. A fastening arrangement (40) comprising a layer stack having at least one thin metal sheet (42) and a screw (10) according to any one of the preceding claims, wherein the thickness of the layer stack corresponds at most to the length of the thread-free shaft portion (20).

8. The fastening arrangement according to claim 7, **characterized in that** the thin metal sheet (42) is the layer of the layer stack that is furthest from the screw head (14).

9. The fastening arrangement according to claim 7 or 8, **characterized in that** the layer that is furthest from the screw head has a maximum thickness of 1 mm.

## Revendications

1. Vis (10) avec
- une tête de vis (14) dotée d'une partie de saisie (12),
- une tige (16),qui définit un axe de vis et porte un filetage (18), et
- une section de tige (20) sans filetage disposée entre le filetage (18) et la tête de vis (14),
- sachant qu'une extrémité côté tête (22) du filetage (18) est éboutée,
- sachant que le filetage (18) se termine à proximité de la section de tige (20) sans filetage dans un plan (32), qui entoure au moins en partie la tige (16) à distance constante de la tête de vis (14) et forme un angle α_{E} avec l'axe de vis,
- sachant qu'un flanc (34) côté tête du filetage (18) éloigné de la section de tige (20) sans filetage forme un angle α_{F} avec l'axe de vis et que
- l'angle α_{E} est plus petit que l'angle α_{F}
**caractérisée en ce que**
le filetage (18) comporte un pas constant courant sur plusieurs filets arrivant à la tête de vis (14) et se termine avec un pas de 0 à partir d'un pli (50).

2. Vis (10) selon la revendication 1, **caractérisée en ce que** la section de tige (10) sans filetage
i) comporte au moins en partie un diamètre, lequel est plus gros que le diamètre de noyau du filetage et est plus petit que le diamètre extérieur de filetage ou
ii) comporte au moins en partie un diamètre, lequel est plus petit que ou identique au diamètre de noyau du filetage.

3. Vis (10) selon l'une quelconque des revendications précédentes, **caractérisée en ce que** la section de tige sans filetage voisine de la tête de vis comporte un gradin (36) avec un diamètre de tige, lequel est plus gros que le diamètre de noyau du filetage.

4. Vis (10) selon l'une quelconque des revendications précédentes, **caractérisée en ce que** la vis est une vis autotaraudeuse avec une tige se terminant dans une pointe perceuse (38) ou une vis refouleuse avec un filetage passant dans la pointe (40) de la vis refouleuse.

5. Vis (10) selon l'une quelconque des revendications précédentes, **caractérisée en ce que** le filetage (18) est un filetage pour tôle.

6. Vis (10) selon l'une quelconque des revendications précédentes, **caractérisée en ce que** le filetage (18) est à pas simple ou multiple.

7. Système de fixation (40) avec un ensemble de couches avec au moins une tôle (42) fine et une vis (10), selon l'une quelconque des revendications précédentes, sachant que l'épaisseur de l'ensemble de couches correspond au maximum à la longueur de la section de tige sans filetage (20).

8. Système de fixation selon la revendication 7, **caractérisé en ce que** la tôle (42) fine est la couche la plus éloignée de la tête de vis (14) de l'ensemble de couches.

9. Système de fixation selon la revendication 7 ou 8, **caractérisé en ce que** la couche la plus éloignée de la tête de vis possède une épaisseur maximale de 1 mm.
